# EUROPÄISCHE PATENTSCHRIFT

(11) **EP 3 389 977 B1**
(45) Veröffentlichungstag und Bekanntmachung des Hinweises auf die Patenterteilung: **08.07.2020**
(21) Anmeldenummer: 16812729.8
(22) Anmeldetag: 14.12.2016
(51) Int. Cl.: B29C 45/17, B29C 45/16, B29C 45/00

(54) **SPRITZGIESSVORRICHTUNG ZUR HERSTELLUNG VON MEHRKOMPONENTEN-FORMTEILEN SOWIE VERFAHREN ZUR HERSTELLUNG VON MEHRKOMPONENTEN-FORMTEILEN**
INJECTION-MOULDING DEVICE FOR PRODUCING MULTI-COMPONENT MOULDINGS AND METHOD FOR PRODUCING MULTI-COMPONENT MOULDINGS
DISPOSITIF DE MOULAGE PAR INJECTION POUR LA FABRICATION DE PIÈCES MOULÉES À PLUSIEURS COMPOSANTS AINSI QUE PROCÉDÉ POUR LA FABRICATION DE PIÈCES MOULÉES À PLUSIEURS COMPOSANTS

(30) Priorität: 18.12.2015 DE 102015225937
(43) Veröffentlichungstag der Anmeldung: 24.10.2018
(73) Patentinhaber: Kautex Textron GmbH & Co. KG, 53229 Bonn (DE)
(72) Erfinder: DÜNKELMANN, Oliver, 50259 Pulheim (DE)
(74) Vertreter: Richly & Ritschel Patentanwälte PartG mbB
(86) Internationale Anmeldenummer: PCT/EP2016/081001
(87) Internationale Veröffentlichungsnummer: WO 2017/102843

(56) Entgegenhaltungen:
- EP-A2- 1 116 567
- DE-A1-102005 033 172
- DE-A1-102007 015 216
- DE-A1-102012 011 173
- JP-A- H06 155 509

## Beschreibung

Die Erfindung betrifft eine Spritzgießvorrichtung zur Herstellung von Mehrkomponenten-Formteilen aus einer thermoplastischen Formmasse mit einem eine erste Artikelkavität bildenden Werkzeug, mit Mitteln zum Füllen der ersten Artikelkavität mit der thermoplastischen Formmasse, mit einer Injektionsvorrichtung zur Injektion eines Fluids in die Artikelkavität.

Die Erfindung betrifft weiterhin ein Verfahren zur Herstellung von Mehrkomponenten-Formteilen aus einer thermoplastischen Formmasse unter Verwendung einer Spritzgießvorrichtung der vorstehend beschriebenen Art.

Aus der DE 10 2012 011 173 A1 ist ein Verfahren zum Spritzgießen von mehrkomponentigen Kompaktformteilen und mehrkomponentigen Hohlkörpern aus polymeren Formmassen bekannt, bei welchem in die geöffnete Kavität eines Spritzgießwerkzeugs zunächst Verdrängerkörper in Form von Projektilen auf die Angüsse der Kernkomponenten gesetzt und die Hauptkomponente nach dem Schließen des Werkzeugs eingespritzt wird. Anschließend werden die Projektile mit den jeweiligen Kernkomponenten nacheinander durch die Werkzeugkavität getrieben.

Mit dieser in der DE 10 2012 011 173 A1 beschriebenen Projektil-Injektionstechnik können beispielsweise Rohre mit einem zweikomponentigen Schichtaufbau hergestellt werden. Bei dem Verfahren wird ein Verdrängerkörper von einer polymeren Werkstoffkomponente durch eine andere polymere Werkstoffkomponente getrieben.

Die mit dem Verfahren gemäß DE 10 2012 011 173 A1 hergestellten Rohre sind über ihre gesamte Länge mehrschichtig ausgebildet, wobei das Verfahren dem Sandwich-Spritzgießen nachempfunden ist.

Es besteht grundsätzlich das Bedürfnis, rohrartige Hohlkörper als Mehrkomponenten-Formteile bereit zu stellen, die in Richtung ihrer Längserstreckung aus verschiedenen Komponenten zusammengesetzt sind. Bei einem Einfüllrohr für einen Kraftstoffbehälter besteht beispielweise das Bedürfnis, dieses abschnittsweise aus unterschiedlichen thermoplastischen Kunststoffen auszubilden.

Solche Strukturen sind mit dem aus der DE 10 2012 011 173 A1 bekannten Verfahren nicht herstellbar.

Rohre, die aus mehreren Komponenten bzw. aus unterschiedlichen Kunststoffen unterschiedlicher Eigenschaften abschnittsweise zusammengesetzt sind, werden meist blasgeformt oder extrudiert und dann mit weiteren Montage- und Schweißkomponenten komplettiert.

Eine Spritzgießvorrichtung gemäß Oberbegriff von Anspruch 1 ist beispielsweise aus der DE 10 2005 033 172 A1 und EP 1 116 567 A2 bekannt. Weiterer Stand der Technik ist aus den Dokumenten DE 10 2012 011173 A1, JP H 06 155509 A und DE 10 2007 015 216 A1 bekannt.

Der Erfindung liegt daher die Aufgabe zugrunde, eine Spritzgießvorrichtung zur Herstellung von Mehrkomponenten-Formteilen aus einer thermoplastischen Formmasse bereit zu stellen, mit welcher Mehrkomponenten-Formteile in Form von Hohlkörpern herstellbar sind, die abschnittsweise aus mehreren Komponenten ausgebildet sind.

Der Erfindung liegt weiterhin die Aufgabe zugrunde, ein Verfahren zur Herstellung von solchen Mehrkomponenten-Formteilen aus einer thermoplastischen Formmasse bereitzustellen.

Die Aufgabe wird gelöst durch eine Spritzgießvorrichtung mit dem Merkmal des Anspruchs 1 sowie durch ein Verfahren mit den Merkmalen des Anspruchs 10. Vorteilhafte Ausgestaltungen der Erfindung ergeben sich aus den Unteransprüchen.

Nach einem Gesichtspunkt der Erfindung ist eine Spritzgießvorrichtung zur Herstellung von Mehrkomponenten-Formteilen aus einer thermoplastischen Formmasse mit einem eine erste Artikelkavität bildenden Werkzeug vorgesehen, mit Mitteln zum Füllen der ersten Artikelkavität mit der thermoplastischen Formmasse, mit wenigstens einem ersten Anguss für die erste Artikelkavität mit einer Injektionsvorrichtung zur Injektion eines Fluids in die Artikelkavität, mit einem Formkern und mit einem Formeinsatz, der einen Fortsatz der ersten Artikelkavität bildet und der den Formkern umschließt, wobei der Formkern mit dem Formeinsatz eine mit einer Formmasse füllbare zweiten Artikelkavität bildet, wobei die zweite Artikelkavität des Formeinsatzes einen zweiten Anguss aufweist und wobei die zweite Artikelkavität des Formeinsatzes mittels beweglicher Formteile zeitweise bezüglich der ersten Artikelkavität abgedichtet werden kann.

Erfindungsgemäß wird auf diese Art und Weise mittels des Formeinsatzes und des in diesem angeordneten Formkerns eine zweite Artikelkavität gebildet, die sich koaxial und fluchtend an die erste Artikelkavität anschließt, wobei die zweite Artikelkavität bezüglich der ersten Artikelkavität zeitweise abgedichtet werden kann und der Formkern in der zweiten Artikelkavität ein Kaliber für den auszuformenden Hohlkörper bildet, derart, dass der Hohlkörper in diesem Bereich einen definierten Innendurchmesser aufweist.

Der Hohlkörper kann, muss aber nicht rohrförmig ausgebildet sein. Der Fachmann wird erkennen, dass der als Artikel auszuformende Hohlkörper auch beliebige vieleckige Querschnitte aufweisen kann.

Bei einer Variante der erfindungsgemäßen Spritzgießvorrichtung ist vorgesehen, dass die Injektionsvorrichtung einen Projektilträger mit wenigstens einer Injektionsdüse und mit wenigstens einer Projektilaufnahme für ein Projektil als Verdrängerkörper für die Formmasse umfasst und dass der Projektilträger als Formkern des Formeinsatzes ausgebildet ist.

Das Projektil wird vorzugsweise bei geöffnetem Werkzeug auf den Projektilträger aufgesetzt. Der Projektilträger kann als eine Art Dorn oder Kaliber ausgebildet sein, der zusammen mit dem Formeinsatz die mit der Formmasse füllbare zweite Artikelkavität bildet, wobei der Projektilträger den Formkern des Formeinsatzes bildet, der von dem Formeinsatz umschlossen wird. Die so mit der Formmasse füllbare zweite Artikelkavität schließt sich unmittelbar an die Artikelkavität an. Über den zweiten Anguss des Formeinsatzes kann die zweite Artikelkavität mit einer Formmasse gefüllt werden, die verschieden von der Formmasse sein kann, mit der die erste Artikelkavität ganz oder teilweise gefüllt wird.

Die Spritzgießvorrichtung gemäß der Erfindung umfasst zweckmäßigerweise eine Nebenkavität, die die verdrängte Formmasse aufnimmt.

Alternativ kann die Spritzgießvorrichtung gemäß der Erfindung so ausgebildet sein, dass die verdrängte Formmasse in die Extrusionsvorrichtung, beispielsweise in den Extruder zurück gefördert wird. Das kann beispielsweise dadurch bewerkstelligt werden, dass der Anguß an einem Ende der Artikelkavität angeordnet ist und die Formmasse dann bei gegenläufiger Drehung der Schnecke des Extruders in den Extruder zurück gefördert wird.

Der Formeinsatz kann beispielsweise als mehrteiliger Werkzeugeinsatz ausgebildet sein.

Als Werkzeug im Sinne der vorliegenden Patentanmeldung werden diejenigen Teile der Spritzgießvorrichtung bezeichnet, die die erste Artikelkavität bilden. Das Werkzeug im Sinne der Erfindung kann weitere bewegliche Formteile wie Schieber, bewegliche Formkerne und dergleichen aufweisen. Die erste Artikelkavität des Werkzeugs steht in Verbindung mit einer Nebenkavität, die die verdrängte Formmasse aufnimmt.

Die Injektionsvorrichtung gemäß der Erfindung ist zur Injektion eines unter Hochdrucks stehenden Fluids, beispielsweise zur Injektion von Wasser in die erste Artikelkavität ausgebildet. Das in die Artikelkavität injizierte Fluid, beispielsweise Wasser, kann unmittelbar, d.h. ohne die Verwendung eines Projektils, eine schmelzeflüssige Seele der von der ersten Artikelkavität aufgenommenen Formmasse in eine Nebenkavität verdrängen.

Wenn die Injektionsvorrichtung gemäß der Erfindung als Injektionsvorrichtung mit einem Projektilträger ausgebildet ist, kann der Projektilträger der Injektionsvorrichtung mit einem oder mehreren Fluidkanälen durchsetzt sein und an seinem zur Aufnahme des Projektils ausgebildeten Ende eine Injektionsdüse aufweisen. Auf diese Art und Weise kann mittels des Fluids das Projektil durch die erste Artikelkavität getrieben werden. Dabei wird die schmelzeflüssige Seele der von der ersten Artikelkavität aufgenommenen Formmasse in die zuvor erwähnte Nebenkavität verdrängt.

Die Nebenkavität oder ein anderes Volumen, in welches die Formmasse verdrängt wird, kann mittels hydraulisch betägigbarer Schieber zunächst von der ersten Artikelkavität getrennt sein. Nach einer teilweisen oder vollständigen Füllung der ersten Artikelkavität mit der Formmasse kann mittels der erwähnten Schieber das Volumen oder die Nebenkavität freigegeben werden, so dass die verdrängte Formmasse in die Nebenkavität eintreten kann.

Die Spritzgießvorrichtung gemäß der Erfindung umfasst vorzugsweise wenigstens zwei Angüsse, wobei der erste Anguss in die erste Artikelkavität und der zweite Anguss in die zweite Artikelkavität zwischen dem Formkern und dem Formeinsatz mündet.

Bei einer zweckmäßigen Variante der Spritzgießvorrichtung gemäß der Erfindung ist vorgesehen, dass der Formeinsatz relativ zu dem Werkzeug verstellbar ist, dass der Formeinsatz in einer ersten Stellung gegen die beweglichen Formteile abgedichtet ist und dass der Formeinsatz in einer zweiten vorgeschobenen Stellung die erste Artikelkavität des Werkzeugs abdichtet.

Die beweglichen Formteile können als an und für sich bekannte Schieber ausgebildet sein, die in der ersten Stellung die zwischen dem Formkern und dem Formeinsatz gebildete zweite Artikelkavität verschließen, so dass die zweite Artikelkavität mit einer thermoplastischen Formmasse gefüllt werden kann.

Derweil ist die zweite Artikelkavität über die beweglichen Formteile so abgedichtet, dass diese Formmasse nicht in die erste Artikelkavität eindringen kann. In der zweiten Stellung der beweglichen Formteile ist die zweite Artikelkavität vorzugsweise bezüglich der ersten Artikelkavität geöffnet, so dass eine über den ersten Anguss in die erste Artikelkavität gefüllte Formmasse sich mit der Formmasse innerhalb der zweiten Artikelkavität verbinden kann.

Zweckmäßigerweise bilden der Formeinsatz und der Formkern eine verstellbare Funktionseinheit, die beispielsweise als Ganzes in Richtung auf die erste Artikelkavität vorschiebbar und zurückziehbar ausgebildet sein kann.

Bei einer besonders bevorzugten Variante der erfindungsgemäßen Spritzgießvorrichtung ist vorgesehen, dass der Formeinsatz einen Formhohlraum aufweist, dessen Innendurchmesser dem Innendurchmesser der ersten Artikelkavität entspricht und dass der Formhohlraum koaxial zu der ersten Artikelkavität angeordnet ist. Der Formhohlraum und der Formkern bilden die zweite Artikelkavität.

Auf diese Art und Weise kann ein Hohlkörper mit abschnittsweise verschiedenen Komponenten einer Formmasse bzw. aus verschiedenen Formmassen hergestellt werden, der einen durchgehend gleichbleibenden und gleichmäßigen Außendurchmesser aufweist.

Der Begriff Komponente im Sinne der Erfindung bezeichnet eine thermoplastische Formmasse bzw. einen thermoplastischen Kunststoff mit einer bestimmten Zusammensetzung. Der Begriff Komponente im Sinne der Erfindung ist jedenfalls nicht so zu verstehen, dass dieser einen Bestandteil einer Mischung bezeichnet.

Wenn die Injektionsvorrichtung einen Projektilträger umfasst, kann der Außendurchmesser des Projektilträgers wenigstens über eine Teillänge dem Außendurchmesser des von dem Projektilträger aufzunehmenden Projektils entsprechen, so dass der in diesem Bereich von dem Projektilträger abgeformte Innendurchmesser des als Hohlkörper auszubildenden Artikels in etwa dem Innendurchmesser des Artikels in dem Bereich entspricht, der mittels des Projektils geformt wurde.

Bei einer vorteilhaften Variante der Spritzgießvorrichtung gemäß der Erfindung weisen die beweglichen Formteile kreisringförmige Dichtflächen auf, die in einer ersten geschlossenen Stellung gegen eine entsprechend ausgebildete Dichtfläche des Formkerns anliegen und die in einer zweiten geöffneten Stellung eine Vorschubgasse für den Formeinsatz und den Formkern bilden.

Vorzugsweise ist die erste Stellung des Formeinsatzes eine zurückgezogene Stellung des Formeinsatzes und die zweite Stellung eine durch die Vorschubgasse vorgeschobene Stellung des Formeinsatzes.

Bei einer weiteren vorteilhaften Variante der Spritzgießvorrichtung gemäß der Erfindung weisen die beweglichen Formteile Stirnflächen mit einem treppenförmigen Profil auf. Alternativ können die Stirnflächen ein Profil aufweisen, das einen Hinterschnitt bildet.

Mit einer treppenförmigen bzw. stufenförmigen Ausbildung der Stirnflächen lässt sich eine entsprechende Geometrie der stoßweise aneinander gefügten Komponenten des Hohlkörpers erreichen.

Zweckmäßigerweise ist der Projektilträger als Dorn ausgebildet, der ein zur Aufnahme des Projektils ausgebildetes Ende aufweist, welches wenigstens eine Injektionsdüse bildet.

Das zur Aufnahme des Projektils ausgebildete Ende hat vorzugsweise einen geringeren Außendurchmesser als ein Schaft des Dorns, der im Wesentlichen die Funktion des Formkerns des Formeinsatzes ausübt.

Ein weiterer Gesichtspunkt der Erfindung betrifft ein Verfahren zur Herstellung von Mehrkomponenten-Formteilen aus einer thermoplastischen Formmasse unter Verwendung einer Spritzgießvorrichtung für die Fluid-Injektionstechnik oder Projektil-Injektionstechnik.

Insbesondere betrifft die Erfindung auch ein Verfahren zur Herstellung von Mehrkomponenten-Formteilen aus einer thermoplastischen Formmasse unter Verwendung einer Spritzgießvorrichtung mit einem oder mehreren der vorstehend erläuterten Merkmale.

Auch wenn in der vorliegenden Anmeldung von "einer" thermoplastischen Formmasse die Rede ist, ist darunter zu verstehen, dass dies die Verwendung verschiedener thermoplastischer Formmassen bzw. die Verwendung von Formmassen aus verschiedenen Komponenten eines thermoplastischen Kunststoffs umfasst. Der Begriff Komponente im Sinne der vorliegenden Erfindung ist ausdrücklich nicht im Sinne eines Mischungsbestandteils zu verstehen. Unter einer Komponente im Sinne der Erfindung ist eine thermoplastische Formmasse einer Art zu verstehen, die aus einem einzigen thermoplastischen Kunststoff oder aus einem Blend aus verschiedenen thermoplastischen Kunststoffen bestehen kann.

Das Verfahren kann folgende Verfahrensschritte umfassen:
a) Bereitstellen einer Spritzgießvorrichtung umfassend ein eine erste Artikelkavität aufweisendes Werkzeug mit einer Injektionsvorrichtung, mit einem Formkern und mit einem Formeinsatz, der einen Fortsatz der ersten Artikelkavität bildet und der den Formkern umschließt, wobei der Formkern mit dem Formeinsatz eine mit einer Formmasse füllbare zweite Artikelkavität bildet,
b) Abdichten der zweiten Artikelkavität des Formeinsatzes mittels beweglicher Formteile,
c) wenigstens teilweises Füllen der zweiten Artikelkavität mit einer plastifizierten Formmasse aus einer ersten Komponente eines thermoplastischen Kunststoffs,
d) Öffnen der Formteile vorzugsweise nachdem sich die in Schritt c) gefüllte Formmasse zu einem als Hohlkörper ausgebildeten, vorzugsweise zu einem rohrförmigen Vorformling, wenigstens teilweise verfestigt hat,
e) Verstellen des Formeinsatzes gemeinsam mit dem Formkern in eine von den Formteilen gebildete Vorschubgasse,
f) wenigstens teilweises Füllen der ersten Artikelkavität mit einer Formmasse aus einer zweiten Komponente eines thermoplastischen Kunststoffs, wobei die zweite Komponente verschieden von der ersten Komponente ist und die erste und die zweite Komponente molekular kompatibel sind und wobei sich die zweite Komponente mit dem Vorformling verbindet
g) Einleiten eines unter Druck stehenden Fluids in die erste Artikelkavität mittels der Injektionsvorrichtung , so dass das Fluid einen Teil der Formmasse aus der ersten Artikelkavität verdrängt, so dass ein Hohlkörper, vorzugsweise ein rohrförmiger Artikel ausgebildet wird und
i) Entformen des Artikels, der als Mehrkomponenten-Formteil ausgebildet ist.

Die zuvor genannten Verfahrensschritte werden vorzugsweise in der Reihenfolge ihrer Aufzählung durchgeführt.

Das Verfahren kann beispielsweise unter Verwendung der bekannten Wasser-Injektionstechnik durchgeführt werden.

Nach einer Variante des Verfahrens kann die Verwendung einer Spritzgießvorrichtung vorgesehen sein, bei welcher die Injektionsvorrichtung einen Projektilträger als Formkern des Formeinsatzes umfasst, wobei das Verfahren folgende weitere Verfahrensschritte umfassen kann:
j) Bereitstellen eines Projektils und
k) Bestücken des Projektilträgers mit dem Projektil,
wobei das Verstellen des Formeinsatzes gemeinsam mit dem Projektilträger in die von den Formteilen gebildete Vorschubgasse erfolgt und das Fluid das Projektil unter Verdrängung eines Teils der Formmasse durch die erste Artikelkavität treibt, derart dass das Projektil den Hohlkörper ausbildet.

Das Bereitstellen des Projektils gemäß Verfahrensschritt j) und das Bestücken des Projektilträgers gemäß Verfahrensschritte k) erfolgt vorzugsweise vor dem Verfahrensschritt b).

Das Verfahren gemäß der Erfindung kann als Mehrkomponenten-Spritzgussverfahren mit Projektil-Injektionstechnik vorgesehen sein, wobei das Verfahren die Projektil-Injektionstechnik mit einem Zweikomponenten-Spritzgießverfahren kombiniert, bei welchem unterschiedliche thermoplastische Formmassen über separate Angüsse miteinander verbunden werden.

Das Verfahren sieht vorzugsweise zunächst vor, das die erste Artikelkavität definierende Werkzeug zu öffnen und den Projektilträger mit dem Projektil zu bestücken. Sodann wird das Werkzeug geschlossen. Dabei kann sich der Formeinsatz in einer zurückgezogenen Stellung befinden. In dieser Stellung des Formeinsatzes wird dann die zweite Artikelkavität des Formeinsatzes, der mit dem Projektilträger als bzw. Formkern gebildet wird, mittels beweglicher Formteile abgedichtet. Anschließend kann ein teilweises oder vollständiges Füllen der zweiten Artikelkavität mit einer plastifizierten Formmasse aus einer ersten Komponente eines thermoplastischen Kunststoffes erfolgen. Die zweite Artikelkavität kann beispielsweise als Ringraum ausgebildet sein

Nachdem sich die nach Verfahrensschritt c) gefüllte Formmasse beispielsweise zu einem rohrförmigen Vorformling bzw. Spritzling verfestigt hat, kann der Formeinsatz gemeinsam mit dem Formkern, der beispielsweise als Projektilträger ausgebildet sein kann, in eine von den Formteilen gebildete Vorschubgasse so vorgeschoben werden, dass der Projektilträger mit einem auf diesen aufgesetzten Projektil, das beispielsweise als Kunststoffprojektil ausgebildet ist, in die erste Artikelkavität vorgeschoben wird. Der Spritzling bzw. Vorformling, der vorzugsweise ein Ende des zu fertigenden Hohlkörpers bzw. des zu fertigenden Rohres bildet, kann dabei ebenfalls zumindest teilweise in die erste Artikelkavität vorstehen. Jedenfalls kann der Vorformling bzw. Spritzling die erste Artikelkavität endseitig abdichten, so dass anschließend die erste Artikelkavität wenigstens teilweise mit einer Formmasse aus einer zweiten Komponente eines thermoplastischen Kunststoffs gefüllt werden kann.

Als erste Komponente eines thermoplastischen Kunststoffs kann beispielweise ein thermoplastisches Elastomer vorgesehen sein, als zweite Komponente kann beispielsweise ein im Wesentlichen schlagzähes Polyolefin vorgesehen sein, das zumindest mit dem thermoplastischen Kunststoff des thermoplastischen Elastomers molekular kompatibel ist.

Während des Verfahrensschritts g) kann sich die zweite Komponente mit dem Vorformling bzw. mit dem Spritzling stoffschlüssig verbinden.

Sodann kann vorgesehen sein, eine Nebenkavität des Werkzeugs zu öffnen.

Anschließend kann ein unter Druck stehendes Fluid in die erste Artikelkavität mittels der Injektionsvorrichtung eingeleitet werden, so, dass das Fluid das Projektil unter Verdrängung eines Teils der Formmasse durch die erste Artikelkavität in die Nebenkavität treibt derart, dass das Projektil einen rohrförmigen Artikel mit einem kalibrierten Innendurchmesser ausbildet.

Schließlich kann dann das Entformen des fertigen Artikels erfolgen.

Die Erfindung betrifft vorzugsweise ein Verfahren zur Herstellung eines Mehrkomponenten-Einfüllrohres für einen Fluidbehälter eines Kraftfahrzeuges als Mehrkomponenten-Formteil. Das Einfüllrohr kann endseitig beispielsweise mit einem einstückig angeformten TPE (Thermoplastisches Elastomer) -Ansatz bzw. Fortsatz ausgebildet sein und im Wesentlichen aus Polyamid, HDPE (High Density Polyethylene) oder einem ähnlichen Polyolefin bestehen.

Das Verfahren ermöglicht es, solche Mehrkomponenten-Rohre ohne weiteres in einem Arbeitsgang einstückig durch Spritzgießen herzustellen.

Bei einer zweckmäßigen Ausgestaltung des Verfahrens gemäß der Erfindung ist vorgesehen, dass der Projektilträger als Formkern innerhalb des Formeinsatzes verwendet wird. Der Formkern, beispielsweise als Projektilträger, kann relativ zu dem Formeinsatz verstellbar sein.

Vorteilhaft ist es im Rahmen der Erfindung, wenn der Formkern mit dem Formeinsatz gemeinsam verstellt wird.

Bei einer zweckmäßigen Variante des Verfahrens gemäß der Erfindung ist vorgesehen, dass die erste und die zweite Komponente einen oder mehrere thermoplastische Kunststoffe umfasst, die ausgewählt sind aus einer Gruppe umfassend Polyethylen hoher Dichte, Polyamid, Polyamid 6, Polyamid 12, Polyurethan, Polykarbonat, Acrylnitril-Butadien-Styrol-Coolymerisat, Polyketon, Polystyrol, thermoplastische Elastomere auf Olefinbasis, vernetzte thermoplastische Elastomere auf Olefinbasis, thermoplastische Elastomere auf Urethan-Basis, thermoplastische Polyester-Elastomere und thermoplastische KoPolymere.

Vorzugsweise wird der Artikel gemäß der Erfindung mit einem Abschnitt aus einem nicht-elastomeren Werkstoff und einem Endabschnitt aus einem wenigstens teilweise elastomeren Werkstoff hergestellt.

Die Erfindung wird nachstehend anhand eines in den Zeichnungen dargestellten Ausführungsbeispiels erläutert:
Es zeigen:
- Figur 1: eine schematische Teilschnittansicht eines Spritzgießwerkzeugs gemäß einem ersten Ausführungsbeispiel der Erfindung in einer ersten Stellung des Formeinsatzes und
- Figur 2: eine der Figur 1 entsprechende Ansicht, bei welcher sich der Formeinsatz in einer zweiten Stellung befindet und
- Figur 3: eine schematische Teilschnitt Ansicht eines spritzgießt Werkzeugs gemäß einem zweiten Ausführungsbeispiel der Erfindung.

Die Figuren zeigen vereinfacht Teile einer Spritzgießvorrichtung 1 gemäß der Erfindung. Vorrichtungen zum Extrudieren der thermoplastischen Formmasse sind aus Vereinfachungsgründen nicht dargestellt. Die Spritzgießvorrichtung 1 umfasst ein Werkzeug 2, welches beispielsweise aus zwei Formhälften besteht, die eine erste Artikelkavität 3 definieren. Die erste Artikelkavität 3 kann beispielsweise in Form eines mehrfach im Raum gekrümmten Rohres (3-D-Rohr) ausgebildet sein. Das Werkzeug 2 umfasst mehrere bewegliche Bauteile in Form von Schiebern und dergleichen sowie wenigstens eine Nebenkavität. Die Nebenkavität ist mittels Schiebern gegenüber der ersten Artikelkavität 3 absperrbar. Diese Einzelheiten sind in den Zeichnungen aus Vereinfachungsgründen ebenfalls nicht dargestellt.

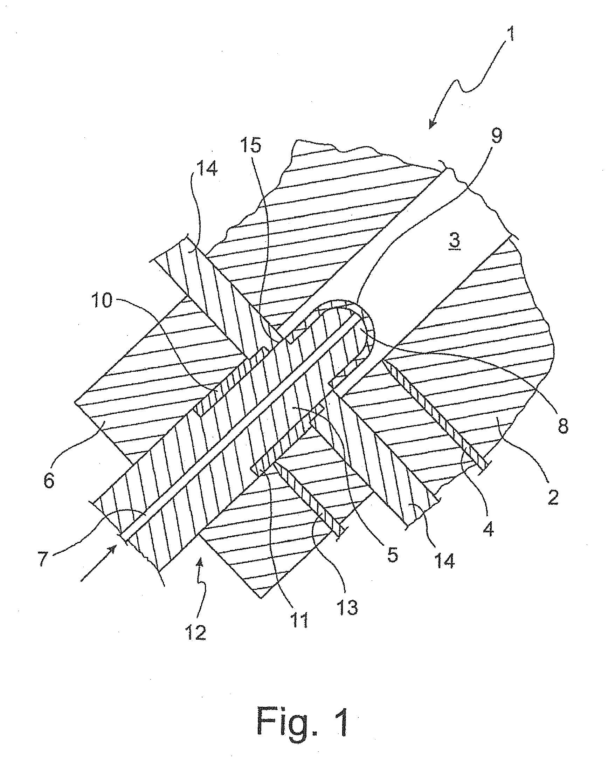

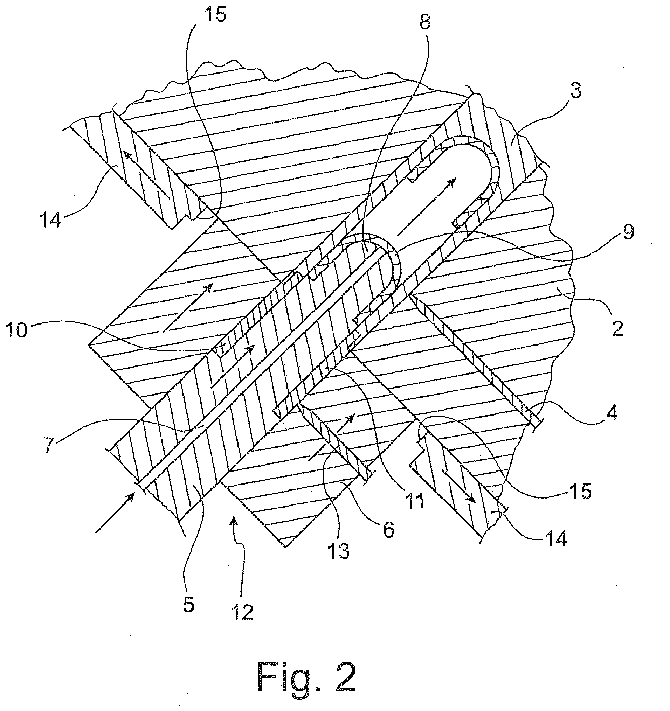

Die Figuren 1 und 2 zeigen ein Ende der ersten Artikelkavität 3 im Bereich eines Endes des beispielsweise als Artikel auszuformenden Rohres. Das Werkzeug 2 umfasst einen ersten Anguss 4, der in die erste Artikelkavität mündet. Weiterhin ist an das Werkzeug 2 angrenzend eine Injektionsvorrichtung 12 mit einem Projektilträger 5 angeordnet. Der Projektilträger 5 durchsetzt einen beweglichen Formeinsatz 6, der ein- oder mehrteilig ausgebildet ist und der Teil der Spritzgießvorrichtung ist.

Der Formeinsatz 6 bildet einen Fortsatz der ersten Artikelkavität 3. Der Innendurchmesser des Formeinsatzes 6 entspricht dem Innendurchmesser der ersten Artikelkavität 3. Der so gebildete Fortsatz ist fluchtend und koaxial zu der ersten Artikelkavität 3 angeordnet.

Der Formeinsatz 6 ist, wie vorstehend bereits erwähnt, in Richtung des in Figur 1 eingezeichneten Pfeils, das heißt, in Richtung der Längsachse der ersten Artikelkavität 3, gemeinsam mit dem Projektilträger 5 verstellbar. Der Projektilträger 5 ist von einem Fluidkanal 7 durchsetzt, der an dem freien Ende des Projektilträgers 5 eine Injektionsdüse 8 ausbildet.

Der Projektilträger 5, der als Dorn ausgebildet ist, nimmt an seinem freien Ende ein Projektil 9 auf, welches als Kunststoffkappe ausgebildet ist.

Der Projektilträger 5 umfasst einen Schaftabschnitt 10, dessen Durchmesser um das Maß der Wandstärke des zu fertigenden Artikels kleiner als der Innendurchmesser des Formeinsatzes 6 ist. In dem Schaftabschnitt 10 bildet der Projektilträger 5 mit dem Formeinsatz 6 eine zweite Artikelkavität 11, der über einen zweiten Anguss 13 mit einer thermoplastischen Formmasse füllbar ist.

Die zwischen dem Projektilträger 5 und dem Formeinsatz 6 gebildete zweite Artikelkavität 11 ist über zwei bewegliche Formteile in Form von Trennschiebern 14 bezüglich der ersten Artikelkavität 3 absperrbar.

Figur 1 zeigt den Formeinsatz 6 in einer ersten zurückgezogenen Stellung, in welcher die Trennschieber 14 jeweils mit einer Dichtfläche 15 gegen den Schaftabschnitt 10 des Profilträgers 5 anliegen. Der Projektilträger, die erste Artikelkavität 3 und die zweite Artikelkavität 11 besitzen jeweils einen kreisringförmigen Querschnitt. Die Dichtflächen 15 der Trennschieber 14 sind kreissegmentförmig ausgebildet und umgreifen den Schaftabschnitt 10 des Projektilträgers 5, so dass die zweite Artikelkavität 11 über die Trennschieber 14 vollständig abgedichtet ist.

Die Figur 1 zeigt die zweite Artikelkavität 11 in einem Zustand, in dem diese mit einer thermoplastischen Formmasse gefüllt ist. Figur 2 zeigt die in Figur 1 gezeichnete Anordnung, wobei dort die Trennschieber 14 geöffnet sind, so dass die Dichtflächen 15 nicht mehr gegen den Schaftabschnitt 10 des Profilträgers 5 anliegen. Darüber hinaus ist der Formeinsatz 6 in einer in Richtung auf die erste Artikelkavität 3 vorgeschobenen Stellung gezeigt, in welcher die zweite Artikelkavität 11 mit der ersten Artikelkavität 3 kommuniziert und die erste Artikelkavität 3 über den Formeinsatz 6 abgedichtet ist. Wenn die Trennschieber 14 in die in Figur 2 dargestellte geöffnete Stellung verfahren werden, geben diese eine Vorschubgasse für den Formeinsatz 6 frei.

In Figur 2 ist der Zustand der Spritzgießvorrichtung 1 dargestellt, bei welchem auch die erste Artikelkavität 3 mit einer thermoplastischen Formmasse gefüllt ist.

Nachstehend wird nun das Verfahren gemäß der Erfindung unter Bezugnahme auf die Figuren 1 und 2 erläutert.

Das Verfahren sieht zunächst vor, dass das beispielsweise aus zwei Formhälften bestehende Werkzeug 2 geöffnet wird. Bei diesem Verfahrensschritt ist der Formeinsatz 6 relativ zu den Formhälften in der in Figur 1 dargestellten Lage angeordnet. Sodann wird der Projektilträger 5 an seinem führenden Ende mit einem Projektil 9 bestückt. Die Formhälften des Werkzeugs 2 werden geschlossen und zugehalten.

In einem nächsten Verfahrensschritt wird eine erste thermoplastische Formmasse mit einer ersten thermoplastischen Komponente in die zwischen Projektilträger 5 und Formeinsatz 6 gebildete zweite Artikelkavität 11 gefüllt. Die zweite Artikelkavität 11 ist über die Trennschieber 14 abgedichtet. Die Trennschieber 14 besitzen jeweils Stirnflächen mit einem treppenförmigen Profil, so dass eine Stirnfläche des in der zweiten Artikelkavität 11 geformten Vorformlings eine entsprechend treppenförmige abgesetzte Kontur aufweist.

Hat sich der so hergestellte Vorformling/Spritzling wenigstens teilweise verfestigt, werden die Trennschieber 14 geöffnet, das heißt in die in Figur 2 dargestellte Stellung verfahren, in welcher sie eine Vorschubgasse für den Formeinsatz 6 bilden. Sodann wird der Formeinsatz 6 in Richtung auf die erste Artikelkavität 3 vorgeschoben, so dass die nunmehr freiliegende Stirnseite des Vorformlings teilweise in die erste Artikelkavität 3 hineinragt. Der Formeinsatz 6 übernimmt in dieser Stellung die Abdichtung der ersten Artikelkavität 3.

In einem nächsten Verfahrensschritt wird über den ersten Anguss 4 eine zweite thermoplastische Formmasse mit einer zweiten thermoplastischen Komponente in die erste Artikelkavität 3 gefüllt. Die Füllung kann, wie das beim Spritzgießen üblich ist, ganz oder teilweise erfolgen.

In einem weiteren Verfahrensschritt werden Schieber geöffnet, die die Nebenkavität mit der ersten Artikelkavität 3 verbinden (nicht dargestellt). Sodann wird der Fluidkanal 7 mit einem unter Druck stehenden Fluid, beispielsweise mit Wasser, beaufschlagt. Das unter Druck stehende Fluid tritt aus der Injektionsdüse 8 aus und treibt das Projektil 9 durch die erste Artikelkavität 3 und verdrängt dabei eine flüssige Seele der in die erste Artikelkavität 3 injizierten thermoplastischen Formmasse in die Nebenkavität, wodurch ein rohrförmiger Artikel aus thermoplastischem Kunststoff mit einer definierten Restwandstärke und einem verhältnismäßig definierten Innendurchmesser entsteht.

Als erste thermoplastische Formmasse wird über den zweiten Anguss 13 des Formeinsatzes vorzugsweise ein thermoplastisches Elastomer injiziert, als zweite thermoplastische Formmasse, die über den ersten Anguss 4 in die erste Artikelkavität 3 injiziert werden kann, kann eine zu dem thermoplastischen Elastomer kompatible, nicht-thermoplastische Komponente vorgesehen sein.

Nach dem Öffnen des Werkzeugs 2 kann das so hergestellte Mehrkomponenten-Formteil in Form eines einstückigen Rohres aus thermoplastischem Kunststoff entnommen werden.

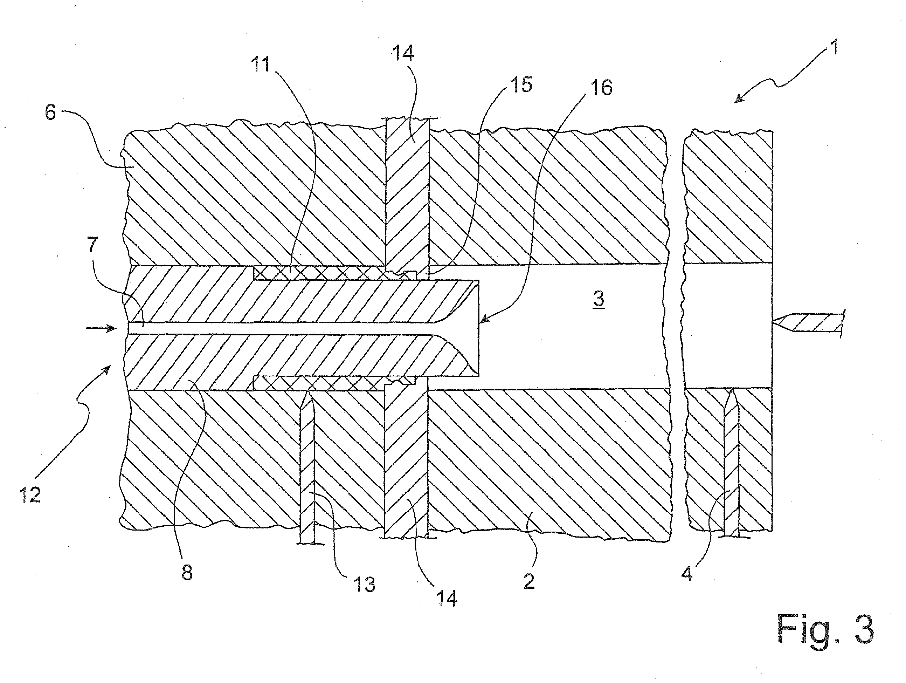

Figur 3 zeigt ein 2. Ausführungsbeispiel einer Spritzgießvorrichtung 1 gemäß der Erfindung. Bei dem in Figur 3 dargestellten Ausführungsbeispiel sind Bauteile, die denjenigen des ersten Ausführungsbeispiels entsprechen mit gleichen Bezugszeichen versehen.

Die Spritzgießvorrichtung 1 gemäß Figur 3 ist dazu ausgebildet, das Verfahren gemäß der Erfindung durchzuführen, bei dem ein unter Druck stehendes Fluid unmittelbar in die Artikelkavität 3 eingeleitet wird (Wasser- Injektionstechnik/WIT). Demgemäß unterscheidet sich die Spritzgießvorrichtung 1 gemäß Figur 3 von derjenigen gemäß den Figuren 1 und 2 dadurch, dass der Formeinsatz 6 eine Injektionsdüse 8 umfasst, die als einfacher Formkern ausgebildet ist und die kein Projektil aufnimmt.

Im Übrigen entspricht der Formeinsatz 6 demjenigen gemäß den Figuren 1 und 2. Das mit der Spritzgießvorrichtung 1 gemäß Figur 3 durchgeführte Verfahren unterscheidet sich von dem Verfahren, welches mit der Spritzgießvorrichtung gemäß Figuren 1 und 2 durchgeführt wird, dadurch, dass kein Projektil vorgesehen ist, welches unter Verdrängung eines Teils der Formmasse durch die erste Artikelkavität 3 getrieben wird.

Figur 3 zeigt den Formeinsatz 6 in einer Stellung, in welcher dieser eine mit der Formmasse füllbare zweite Artikelkavität 11 bildet, wobei die zweite Artikelkavität 11 mittels der Trendschieber 14 bezüglich der ersten Artikelkavität 3 abgedichtet ist. Anschließend erfolgt das Füllen der zweiten Artikelkavität 11 mit der plastifizierten Formmasse über den zweiten Anguß 13.

Wenn sich die Formmasse wenigstens teilweise verfestigt hat, werden die Trennschieber 14 geöffnet und der Formeinsatz 6 wird entsprechend der Anordnung in Figur 2 in Richtung auf die erste Artikelkavität 3 vorgeschoben, sodass die nunmehr freiliegende Stirnseite des so hergestellten Vorformlings/Spritzlings in die erste Artikelkavität hineinragt. Der Formeinsatz 6 übernimmt in dieser Stellung die Abdichtung der ersten Artikelkavität 3.

In einem nächsten Verfahrensschritt wird über den ersten Anguß 4 eine zweite thermoplastische Formmasse bzw. eine zweite thermoplastische Komponente in die erste Artikelkavität 3 gefüllt. Die Füllung kann auch bei dem Ausführungsbeispiel gemäß Figur 3 ganz oder teilweise erfolgen.

In einem weiteren Verfahrensschritt werden Schieber geöffnet, die die Nebenkavität mit der ersten Artikelkavität 3 verbinden (nicht dargestellt). Sodann wird der Fluidkanal 7 mit einem unter Druck stehenden Fluid, beispielsweise mit Wasser beaufschlagt. Das unter Druck stehende Fluid tritt aus der Injektionsdüse 8 aus und verdrängt dabei unmittelbar eine flüssige Seele der in die erste Artikelkavität 3 injizierten thermoplastischen Formmasse in die Nebenkavität. Um eine möglichst großflächige Verdrängung der noch plastischen Formmasse zu erwirken, ist die Injektionsdüse 8 mit einer diffusorartig erweiterten Mündung 16 versehen.

Die Trennschieber 14 gemäß dem in Figur 3 dargestellten Ausführungsbeispiel unterscheiden sich von den Trennschiebern 14 gemäß dem in Figuren 1 und 2 dargestellten Ausführungsbeispiel dadurch, dass deren Stirnflächen ein Profil aufweisen, welches an dem Vorformling einen Hinterschnitt erzeugt, in welchen die in die zweite Artikelkavität 3 injizierten zweite Komponente des thermoplastischen Kunststoffs eingreifen kann, sodass die so erzeugten Abschnitte des Artikels sowohl stoffschlüssig als auch formschlüssig ineinandergreifen.

Das mit dem Verfahren gemäß der Erfindung hergestellte Mehrkomponenten-Formteil kann beispielsweise als Einfüllrohr eines Fluidbehälters eines Kraftfahrzeuges ausbildet sein, welches einen ersten Abschnitt aus einem thermoplastischen Polymer und einen zweiten Abschnitt aus einem HDPE oder beispielsweise einem Polyamid aufweisen kann.

### Bezugszeichenliste:

1. Spritzgießvorrichtung
2. Werkzeug
3. Erste Artikelkavität
4. Erster Anguss
5. Projektilträger
6. Formeinsatz
7. Fluidkanal
8. Injektionsdüse
9. Projektil
10.Schaftabschnitt des Projektilträgers
11.Zweite Artikelkavität
12. Injektionsvorrichtung
13.Zweiter Anguss
14. Trennschieber
15. Dichtfläche
16.Mündung der Injektionsdüse 8 (nur Fig.3)

## Patentansprüche

1. Spritzgießvorrichtung (1) zur Herstellung von Mehrkomponenten-Formteilen aus einer thermoplastischen Formmasse mit einem eine erste Artikelkavität (3) bildenden Werkzeug (2), mit Mitteln zum Füllen der ersten Artikelkavität (3) mit der thermoplastischen Formmasse, mit wenigstens einem ersten Anguss (4) für die erste Artikelkavität (3), mit einer Injektionsvorrichtung zur Injektion eines Fluids in die Artikelkavität und mit einem Formkern (5), **dadurch gekennzeichnet, dass** die Spritzgießvorrichtung einen Formeinsatz aufweist, der einen Fortsatz der ersten Artikelkavität (3) bildet und den Formkern (5) umschließt, wobei der Formkern mit dem Formeinsatz eine mit einer Formmasse füllbare zweite Artikelkavität (11) bildet, wobei der Formeinsatz einen zweiten Anguss (13) aufweist und wobei die zweite Artikelkavität (11) des Formeinsatzes mittels beweglicher Formteile (14) zeitweise bezüglich der ersten Artikelkavität (3) abgedichtet werden kann.

2. Spritzgießvorrichtung (1) nach Anspruch 1, **dadurch gekennzeichnet, dass** die Injektionsvorrichtung einen Projektilträger (5) mit wenigstens einer Injektionsdüse (8) und mit wenigstens einer Projektilaufnahme für ein Projektil (9) als Verdrängerkörper für die Formmasse umfasst und dass der Projektilträger (5) als Formkern des Formeinsatzes ausgebildet ist.

3. Spritzgießvorrichtung (1) nach Anspruch 1 oder Anspruch 2, **dadurch gekennzeichnet, dass** der Formeinsatz relativ zu dem Werkzeug (2) verstellbar ist, dass der Formeinsatz in einer ersten Stellung gegen die beweglichen Formteile abgedichtet ist und dass der Formeinsatz in einer zweiten vorgeschobenen Stellung die erste Artikelkavität (3) des Werkzeugs (2) abdichtet.

4. Spritzgießvorrichtung (1) nach Anspruch 2 oder 3, **dadurch gekennzeichnet, dass** der Formeinsatz und der Formkern eine verstellbare Funktionseinheit bilden.

5. Spritzgießvorrichtung (1) nach einem der Ansprüche 1 bis 4, **dadurch gekennzeichnet, dass** der Formeinsatz einen Formhohlraum aufweist, dessen Innendurchmesser dem Innendurchmesser der ersten Artikelkavität (3) entspricht und dass der Formhohlraum koaxial zu der ersten Artikelkavität (3) angeordnet ist.

6. Spritzgießvorrichtung (1) nach einem der Ansprüche 1 bis 5, **dadurch gekennzeichnet, dass** die beweglichen Formteile Dichtflächen(15) aufweisen, die in einer ersten geschlossenen Stellung gegen eine entsprechend ausgebildete Dichtfläche (15) des Projektilträgers (5) anliegen und die in einer zweiten geöffneten Stellung eine Vorschubgasse für den Formeinsatz und den Formkern bilden.

7. Spritzgießvorrichtung (1) nach Anspruch 6, **dadurch gekennzeichnet, dass** die Formteile Stirnflächen mit einem hinterschnittenen oder treppenförmigen Profil aufweisen.

8. Spritzgießvorrichtung (1) nach einem der Ansprüche 2 bis 7, **dadurch gekennzeichnet, dass** der Projektilträger (5) als Dorn ausgebildet ist, der ein zur Aufnahme des Projektils (9) ausgebildetes Ende aufweist, welches wenigstens eine Injektionsdüse (8) bildet.

9. Spritzgießvorrichtung (1) nach einem der Ansprüche 1 bis 8, **dadurch gekennzeichnet, dass** die zweite Artikelkavität (11) als Ringraum ausgebildet ist.

10. Verfahren zur Herstellung von Mehrkomponenten-Formteilen aus einer thermoplastischen Formmasse insbesondere unter Verwendung einer Spritzgießvorrichtung (1) mit den Merkmalen der Ansprüche 1 bis 9, folgende Verfahrensschritte umfassend:
a) Bereitstellen einer Spritzgießvorrichtung umfassend ein eine erste Artikelkavität (3) aufweisendes Werkzeuge (2) mit einer Injektionsvorrichtung, mit einem Formkern (5) und mit einem Formeinsatz, (6), der einen Fortsatz der ersten Artikelkavität (3) bildet und der den Formkern umschließt, wobei der Formkern mit dem Formeinsatz eine mit einer Formmasse füllbare zweite Artikelkavität (11) bildet
b) Abdichten der zweiten Artikelkavität (11) des Formeinsatzes mittels beweglicher Formteile, (14),
c) wenigstens teilweises Füllen der zweiten Artikelkavität (11) mit einer plastifizierten Formmasse aus einer ersten Komponente eines thermoplastischen Kunststoffs,
d) Öffnen der Formteile (14) vorzugsweise nachdem sich die in Schritt c) gefüllte Formmasse zu einem als Hohlkörper ausgebildeten, vorzugsweise zu einem rohrförmigen Vorformling, wenigstens teilweise verfestigt hat,
e) Verstellen des Formeinsatzes gemeinsam mit dem Formkern in eine von den Formteilen gebildete Vorschubgasse,
f) wenigstens teilweises Füllen der ersten Artikelkavität (3) mit einer Formmasse aus einer zweiten Komponente eines thermoplastischen Kunststoffs, wobei die zweite Komponente verschieden von der ersten Komponente ist und die erste und die zweite Komponente molekular kompatibel sind und wobei sich die zweite Komponente mit dem Vorformling verbindet
g) Einleiten eines unter Druck stehenden Fluids in die erste Artikelkavität (3) mittels der Injektionsvorrichtung (12), so dass das Fluid einen Teil der Formmasse aus der ersten Artikelkavität (3) verdrängt, so dass ein Hohlkörper, vorzugsweise ein rohrförmiger Artikel ausgebildet wird und
i) Entformen des Artikels, der als Mehrkomponenten-Formteil ausgebildet ist.

11. Verfahren nach Anspruch 10, unter Verwendung einer Spritzgießvorrichtung, bei welcher die Injektionsvorrichtung einen Projektilträger (5) als Formkern des Formeinsatzes umfasst, folgende weitere Verfahrensschritte umfassend:
j) Bereitstellen eines Projektils (9),
k) Bestücken des Projektilträgers (5) mit dem Projektil (9),
wobei das Verstellen des Formeinsatzes gemeinsam mit dem Projektilträger (5) in die von den Formteilen gebildete Vorschubgasse erfolgt und das Fluid das Projektil (9) unter Verdrängung eines Teils der Formmasse durch die erste Artikelkavität (3) treibt, derart, dass das Projektil (9) den Hohlkörper ausbildet.

12. Verfahren nach Anspruch 10 oder 11, **dadurch gekennzeichnet, dass** die erste und die zweite Komponente ein oder mehrere thermoplastische Kunststoffe umfasst, die ausgewählt sind aus einer Gruppe umfassend Polyethylen hoher Dichte, Polyamid, Polyamid 6, Polyamid 12, Polyurethan, Polycarbonat, Acrylnitril-Butadien-Styrol-Copolymerisat, Polyketon, Polystyrol, thermoplastische Elastomere auf Olefin Basis, vernetzte thermoplastische Elastomere auf Olefin Basis, thermoplastische Elastomere auf Urethan Basis, thermoplastische Polyester Elastomere und thermoplastische Copolymere.

13. Verfahren nach einem der Ansprüche 10 bis 12, **dadurch gekennzeichnet, dass** als Artikel ein Artikel mit einem Abschnitt aus einem nicht elastomeren Werkstoff und mit einem Endabschnitt aus einem elastomeren Werkstoff hergestellt wird.

## Claims

1. An injection-molding device (1) for producing multi-component moldings from a thermoplastic molding compound, having a mold (2) forming a first article cavity (3), having means for filling the first article cavity (3) with the thermoplastic molding compound, having at least one first sprue (4) for the first article cavity (3), having an injection device for injecting a fluid into the article cavity and having a mold core
**characterized in that**
the injection-molding device comprises a mold insert, which forms an appendage of the first article cavity (3) and which encloses the mold core (5), wherein the mold core with the mold insert forms a second article cavity (11) that is capable of being filled with a molding compound, wherein the mold insert has a second sprue (13), and wherein the second article cavity (11) of the mold insert can be temporarily sealed in relation to the first article cavity (3) by means of movable mold parts.

2. The injection-molding device (1) as claimed in claim 1, **characterized in that** the injection device comprises a projectile carrier (5) having at least one injection nozzle (8) and at least one projectile a receptacle for a projectile (9) as displacement member for the molding compound, and **in that** the projectile carrier (5) is configured as the mold core of the mold insert.

3. The injection-molding device (1) as claimed in claim 1 or claim 2, **characterized in that** the mold insert is readjustable relative to the mold (2), **in that** the mold insert in a first position is sealed in relation to the movable mold parts, and **in that** the mold insert in the second advanced position seals the first article cavity (3) of the mold (2).

4. The injection-molding device (1) as claimed in claim 2 or 3, **characterized in that** the mold insert and the mold core form a readjustable functional unit.

5. The injection-molding device (1) as claimed in one of claims 1 to 4, **characterized in that** the mold insert has a mold cavity, the internal diameter of the latter corresponding to the internal diameter of the first article cavity (3), and **in that** the mold cavity is disposed so as to be coaxial with the first article cavity (3).

6. The injection-molding device (1) as claimed in one of claims 1 to 5, **characterized in that** the movable mold parts have sealing faces (15) which in a first closed position bear on a correspondingly configured sealing face (15) of the projectile carrier (5), and which in a second open position form an advancement path for the mold insert and the mold core.

7. The injection-molding device (1) as claimed in claim 6, **characterized in that** the mold parts have end faces having an undercut or step-shaped profile.

8. The injection-molding device (1) as claimed in one of claims 2 to 7, **characterized in that** projectile carrier (5) is configured as a mandrel which has an end that is configured for receiving the projectile (9) and which end forms at least one injection nozzle (8).

9. The injection-molding device (1) as claimed in one of claims 1 to 8, **characterized in that** the second article cavity (11) is configured as an annular space.

10. A method for producing multi-component moldings from a thermoplastic molding compound, in particular while using an injection-molding device (1) having the features of claims 1 to 9, said method comprising the following method steps:
a) providing an injection-molding device comprising a mold (2) having a first article cavity (3), having an injection device, having a mold core (5), and having a mold insert (6) which forms an appendage of the first article cavity (3) and which encloses the mold core, wherein the mold core with the mold insert forms a second article cavity (11) that is capable of being filled with a molding compound;
b) sealing the second article cavity (11) of the mold insert by means of movable mold parts;
c) at least partially filling the second article cavity (11) with a plasticized molding compound from a first component of a thermoplastic plastics material;
d) opening the mold parts (14), preferably after the molding compound that has been filled in step c) has at least partially solidified to a hollow body, preferably to a tubular preform;
e) readjusting the mold insert conjointly with the mold core into an advancement path that is formed by the mold parts;
f) at least partially filling the first article cavity (3) with a molding compound from a second component of the thermoplastic plastics material, wherein the second component is different from the first component, and the first component and the second component in molecular terms are compatible, and wherein the second component connects to the preform;
g) introducing a pressurized fluid into the first article cavity (3) by means of the injection device (12) such that the fluid displaces part of the molding compound from the first article cavity (3) such that a hollow body, preferably a tubular article, is configured; and
i) demolding the article which is configured as a multi-component molding.

11. The method as claimed in claim 10, while using an injection-molding device in which the injection device comprises a projectile carrier (5) as the mold core of the mold insert, said method comprising the following further method steps:
j) providing a projectile (9);
k) equipping the projectile carrier (5) with the projectile (9),
wherein the readjustment of the mold insert into the advancement path that is formed by the mold parts is performed conjointly with the projectile carrier (5), and the fluid drives the projectile (9) through the first article cavity (3) while displacing part of the molding compound in such a manner that the projectile (9) configures the hollow body.

12. The method as claimed in claim 10 or 11, **characterized in that** the first component and the second component comprise one or a plurality of thermoplastic plastics materials which are selected from the group comprising high-density polyethylene, polyamide, polyamide 6, polyamide 12, polyurethane, polycarbonate, acrylonitrile-butadiene-styrene copolymer, polyketone, polystyrene, olefin-based thermoplastic elastomers, cross-linked thermoplastic olefin-based elastomers, thermoplastic urethane-based elastomers, thermoplastic polyester elastomers, and thermoplastic copolymers.

13. The method as claimed in one of claims 10 to 12, **characterized in that** an article having a portion from a non-elastomeric material and an end portion from an elastomer material is produced as the article.

## Revendications

1. Dispositif de moulage par injection (1) pour la fabrication de pièces moulées à plusieurs composants à partir d'un matériau de moulage thermoplastique, avec un outil (2) formant une première cavité d'article (3), avec des moyens pour remplir la première cavité d'article (3) avec le matériau de moulage thermoplastique, avec au moins une première carotte (4) pour la première cavité d'article (3), avec un dispositif d'injection pour injecter un fluide dans la cavité d'article et avec un noyau de moule (5), **caractérisé en ce que**
le dispositif de moulage par injection comprend un insert de moule, qui forme un prolongement de la première cavité d'article (3) et entoure le noyau de moule (5), le noyau de moule formant, avec l'insert de moule, une deuxième cavité d'article (11) pouvant être remplie avec un matériau de moulage, l'insert de moule comprenant une deuxième carotte (13) et la deuxième cavité d'article (11) de l'insert de moule pouvant être étanchéifiée temporairement par rapport à la première cavité d'article (3) au moyen de pièces moulées mobiles (14) .

2. Dispositif de moulage par injection (1) selon la revendication 1, **caractérisé en ce que** le dispositif d'injection comprend un support de projectile (5) comprenant au moins une buse d'injection (8) et comprenant au moins un logement de projectile pour un projectile (9) en tant que corps de refoulement pour le matériau de moulage, et **en ce que** le support de projectile (5) est configuré en tant que noyau de moule de l'insert de moule.

3. Dispositif de moulage par injection (1) selon la revendication 1 ou la revendication 2, **caractérisé en ce que** l'insert de moule est ajustable par rapport à l'outil (2), **en ce que** l'insert de moule est étanchéifié dans une première position contre les pièces moulées mobiles et **en ce que** l'insert de moule étanchéifié dans une deuxième position avancée la première cavité d'article (3) de l'outil (2).

4. Dispositif de moulage par injection (1) selon la revendication 2 ou 3, **caractérisé en ce que** l'insert de moule et le noyau de moule forment une unité fonctionnelle ajustable.

5. Dispositif de moulage par injection (1) selon l'une quelconque des revendications 1 à 4, **caractérisé en ce que** l'insert de moule comprend un espace vide de moule, dont le diamètre intérieur correspond au diamètre intérieur de la première cavité d'article (3), et **en ce que** l'espace vide de moule est agencé coaxialement à la première cavité d'article (3).

6. Dispositif de moulage par injection (1) selon l'une quelconque des revendications 1 à 5, **caractérisé en ce que** les pièces moulées mobiles comprennent des surfaces d'étanchéité (15), qui reposent dans une première position fermée contre une surface d'étanchéité (15) configurée de manière correspondante du support de projectile (5) et qui forment dans une deuxième position ouverte une voie d'alimentation pour l'insert de moule et le noyau de moule.

7. Dispositif de moulage par injection (1) selon la revendication 6, **caractérisé en ce que** les pièces moulées présentent des surfaces frontales ayant un profil contre-dépouillé ou en forme d'escalier.

8. Dispositif de moulage par injection (1) selon l'une quelconque des revendications 2 à 7, **caractérisé en ce que** le support de projectile (5) est configuré sous la forme d'un mandrin, qui comprend une extrémité configurée pour le logement du projectile (9), qui forme au moins une buse d'injection (8).

9. Dispositif de moulage par injection (1) selon l'une quelconque des revendications 1 à 8, **caractérisé en ce que** la deuxième cavité d'article (11) est configurée sous la forme d'un espace annulaire.

10. Procédé de fabrication de pièces moulées à plusieurs composants à partir d'un matériau de moulage thermoplastique, notamment en utilisant un dispositif de moulage par injection (1) ayant les caractéristiques des revendications 1 à 9, comprenant les étapes de procédé suivantes :
a) la préparation d'un dispositif de moulage par injection comprenant un outil (2) présentant une première cavité d'article (3) avec un dispositif d'injection, avec un noyau de moule (5) et avec un insert de moule (6), qui forme un prolongement de la première cavité d'article (3) et qui entoure le noyau de moule, le noyau de moule formant, avec l'insert de moule, une deuxième cavité d'article (11) pouvant être remplie avec un matériau de moulage,
b) l'étanchéification de la deuxième cavité d'article (11) de l'insert de moule au moyen de pièces moulées mobiles (14),
c) le remplissage au moins partiel de la deuxième cavité d'article (11) avec un matériau de moulage plastifié constitué par un premier composant d'un plastique thermoplastique,
d) l'ouverture des pièces moulées (14), de préférence après que le matériau de moulage rempli à l'étape c) se soit au moins partiellement solidifié en une préforme configurée sous la forme d'un corps creux, de préférence tubulaire,
e) l'ajustement de l'insert de moule conjointement avec le noyau de moule dans une voie d'alimentation formée par les pièces moulées,
f) le remplissage au moins partiel de la première cavité d'article (3) avec un matériau de moulage constitué par un deuxième composant d'un plastique thermoplastique, le deuxième composant étant différent du premier composant, et le premier et le deuxième composant étant moléculairement compatibles, et le deuxième composant se reliant avec la préforme,
g) l'introduction d'un fluide sous pression dans la première cavité d'article (3) au moyen du dispositif d'injection (12), de telle sorte que le fluide refoule une partie du matériau de moulage hors de la première cavité d'article (3), de telle sorte qu'un corps creux, de préférence un article tubulaire, soit formé, et
i) le démoulage de l'article, qui est configuré sous la forme d'une pièce moulée à plusieurs composants.

11. Procédé selon la revendication 10, utilisant un dispositif de moulage par injection, dans lequel le dispositif d'injection comprend un support de projectile (5) en tant que noyau de moule de l'insert de moule, comprenant les étapes de procédé supplémentaires suivantes :
j) la préparation d'un projectile (9),
k) le chargement du support de projectile (5) avec le projectile (9),
l'ajustement de l'insert de moule conjointement avec le support de projectile (5) ayant lieu dans la voie d'alimentation formée par les pièces moulées et le fluide poussant le projectile (9) au travers de la première cavité d'article (3) avec refoulement d'une partie du matériau de moulage, de telle sorte que le projectile (9) forme le corps creux.

12. Procédé selon la revendication 10 ou 11, **caractérisé en ce que** le premier et le deuxième composant comprennent un ou plusieurs plastiques thermoplastiques, qui sont choisis dans un groupe comprenant le polyéthylène haute densité, le polyamide, le polyamide 6, le polyamide 12, le polyuréthane, le polycarbonate, le copolymère d'acrylonitrile-butadiène-styrène, la polycétone, le polystyrène, les élastomères thermoplastiques à base d'oléfine, les élastomères thermoplastiques réticulés à base d'oléfine, les élastomères thermoplastiques à base d'uréthane, les élastomères de polyesters thermoplastiques et les copolymères thermoplastiques.

13. Procédé selon l'une quelconque des revendications 10 à 12, **caractérisé en ce qu'**un article avec une section en un matériau non élastomère et avec une section d'extrémité en un matériau élastomère est fabriqué en tant qu'article.
